(19) Europäisches Patentamt
European Patent Office
Office européen des brevets

(11)     **EP 1 654 201 B1**

(12)                          **FASCICULE DE BREVET EUROPEEN**

(45) Date de publication et mention
de la délivrance du brevet:
**12.02.2020   Bulletin 2020/07**

(51) Int Cl.:
***C03C 17/245*** *(2006.01)*

(21) Numéro de dépôt: **04785986.3**

(86) Numéro de dépôt international:
**PCT/FR2004/001927**

(22) Date de dépôt: **21.07.2004**

(87) Numéro de publication internationale:
**WO 2005/009914 (03.02.2005 Gazette 2005/05)**

(54) **PROCEDE DE PREPARATION D'UN REVETEMENT PHOTOCATALYTIQUE INTEGRE DANS LE TRAITEMENT THERMIQUE D'UN VITRAGE**

IN DIE VERGLASUNGSWÄRMEBEHANDLUNG INTEGRIERTES VERFAHREN ZUR HERSTELLUNG EINER PHOTOKATALYTISCHEN BESCHICHTUNG

METHOD FOR PREPARING A PHOTOCATALYTIC COATING INTEGRATED INTO GLAZING HEAT TREATMENT

(84) Etats contractants désignés:
**AT BE BG CH CY CZ DE DK EE ES FI FR GB GR HU IE IT LI LU MC NL PL PT RO SE SI SK TR**

(30) Priorité: **23.07.2003   FR 0308975**

(43) Date de publication de la demande:
**10.05.2006   Bulletin 2006/19**

(73) Titulaire: **SAINT-GOBAIN GLASS FRANCE**
**92400 Courbevoie (FR)**

(72) Inventeurs:
• **LABROUSSE, Laurent**
**F-93120 La Courneuve (FR)**

• **NADAUD, Nicolas**
**F-94250 Gentilly (FR)**

(74) Mandataire: **Saint-Gobain Recherche**
**Département Propriété Industrielle**
**39 Quai Lucien Lefranc**
**93300 Aubervilliers (FR)**

(56) Documents cités:
**EP-A- 1 182 174           WO-A-00/75087**
**WO-A1-2004/108619      US-A1- 2002 045 073**
**US-B1- 6 413 581**

**Description**

La présente invention a trait aux vitrages munis d'un revêtement à propriétés photocatalytiques, du type comprenant de l'oxyde de titane au moins partiellement cristallisé, notamment sous forme anatase.

Plusieurs techniques sont connues pour la préparation d'un tel revêtement, notamment sur une feuille de verre, en vue d'obtenir un produit à qualité optique élevée. Sont disponibles par exemple un procédé sol-gel consistant en un dépôt de précurseur de dioxyde de titane en solution, puis chauffage de manière à former le dioxyde cristallisé sous forme anatase, un procédé de pyrolyse notamment en phase gazeuse (Chemical Vapour Deposition - CVD -), dans laquelle des précurseurs du dioxyde de titane en phase gazeuse sont mis en contact avec le substrat chaud, éventuellement en cours de refroidissement, en particulier la face atmosphère d'un verre en sortie de float.

S'avère également particulièrement intéressante au plan de l'industrialisation la pulvérisation cathodique, connue du brevet WO 97/10186. C'est une technique sous vide qui permet, notamment, d'ajuster très finement les épaisseurs et la stoechiométrie des couches déposées. Elle est généralement assistée par champ magnétique pour plus d'efficacité. Elle peut être réactive : on part alors d'une cible essentiellement métallique, ici à base de titane (éventuellement allié à un autre métal ou à du silicium), et la pulvérisation se fait en atmosphère oxydante, généralement un mélange $Ar/O_2$. Elle peut aussi être non réactive, on part alors d'une cible dite céramique qui est déjà sous la forme oxydée du titane (éventuellement alliée). Le dioxyde de titane produit par pulvérisation cathodique est généralement amorphe ou mal cristallisé et il est nécessaire de le chauffer ultérieurement pour qu'il cristallise sous la forme photocatalytiquement active.

Le document US 2002/045073 décrit une méthode d'obtention d'un revêtement photocatalytique en obtenant un revêtement de dioxyde de titane sous forme anatase à partir d'une couche de dioxyde de titane amorphe ou de titane métallique déposée sur une sous-couche d'épitaxie d'oxyde de zirconium cristallisée sous forme cubique ou orthorhombique.

La demande WO 02/24971 décrit le dépôt sur verre de revêtements de dioxyde de titane partiellement cristallisé anatase, par pulvérisation cathodique à pression de travail relativement élevée d'au moins 2 Pa ; dans une première variante, le substrat est à 220-250°C par exemple pendant le dépôt, un recuit conventionnel à 400°C environ étant ensuite effectué le cas échéant ; dans une deuxième variante, le dépôt est effectué sur substrat à température ambiante, puis l'ensemble est chauffé à 550°C au plus, pendant quelques heures.

Dans l'état actuel des connaissances, si des propriétés particulières nécessitant un traitement thermique de recuit, bombage, trempe ou autre à plus de 600°C, voire jusqu'à 700 °C dans certains cas, étaient recherchées pour un vitrage à $TiO_2$ photocatalytique, le spécialiste déposerait immanquablement le $TiO_2$ ou ses précurseurs après ce traitement thermique, puis l'activerait ou ferait réagir les précurseurs en appliquant une température plus modérée. En particulier il est estimé que des températures supérieures à 600 °C favorisent la cristallisation du $TiO_2$ forme rutile, moins active photocatalytiquement que la forme anatase.

Or les inventeurs ont réussi à obtenir une activité photocatalytique et une qualité optique élevées en cristallisant le dioxyde de titane aux températures des traitements thermiques classiques du verre, ce qui permet d'obtenir cette cristallisation par la seule trempe, ou autre, et d'éviter une opération ultérieure supplémentaire de chauffage à température plus modérée.

A cet effet, l'invention a pour objet un procédé de préparation d'un matériau à propriétés photocatalytiques comprenant de l'oxyde de titane au moins partiellement cristallisé sous forme anatase, tel que défini à la revendication 1. Le précédé de l'invention met en œuvre des températures excédant 600°C. Il en résulte donc une meilleure intégration de cette préparation dans différents procédés industriels, qui s'en trouvent simplifiés par la suppression d'une opération spécifique de cristallisation à relativement basse température. La durée de ces procédés en est raccourcie d'autant. Les dispositifs sont réduits car des moyens de chauffage accomplissent simultanément deux fonctions. Finalement, le coût de ces procédés est diminué.

Selon des réalisations préférées et/ou ayant particulièrement motivé l'invention :

- le procédé met en œuvre des températures excédant 630 °C ;
- il met en œuvre un traitement de trempe et/ou bombage d'un vitrage (c'est-à-dire notamment des températures pouvant atteindre 700 °C).

Le procédé de l'invention comprend le dépôt d'un revêtement d'oxyde de titane sur une première face d'un premier substrat transparent ou semi-transparent du type verre, vitrocéramique qui, éventuellement, a été munie au préalable d'un ou plusieurs empilements de couches fonctionnelles et/ou couches fonctionnelles, dont la nature sera décrite en détails dans la suite.

Concernant le procédé de l'invention :

- il comprend le dépôt, sur la seconde face dudit premier substrat transparent ou semi-transparent, d'un ou plusieurs empilements de couches fonctionnelles et/ou couches fonctionnelles, dont la nature est également détaillée ci-dessous (ainsi le procédé de l'invention permet-il d'obtenir des produits transparents ou semi-transparents à propriétés mécaniques obtenues par traitement thermique à relativement haute température, et susceptibles de présenter le plus large éventail de fonctionnalités combinées);

- ladite mise en œuvre de températures excédant 600 °C est postérieure aux dépôts sur lesdites première et seconde faces (les produits déposés sur les première et seconde faces sont chauffés simultanément à plus de 600 °C, ce qui peut être avantageux et économique, le second substrat étant alors de surcroît lui aussi traité thermiquement) ;
- les dépôts sur lesdites première et seconde faces sont effectués par pulvérisation cathodique en ligne et simultanément ou quasi-simultanément, selon une direction sensiblement identique et un sens opposé (est notamment visé l'emploi d'une installation de pulvérisation cathodique assistée par champ magnétique par le dessus et le dessous, désignée communément « sputter up and down », dans laquelle les première et seconde faces sont horizontales et orientées respectivement vers le haut et le bas, de sorte qu'elles soient mises en contact par des cônes de pulvérisation de direction moyenne verticale descendant -down- pour TiO$_2$, respectivement ascendant -up- pour l'empilement de contrôle thermique). Cependant toute autre orientation des première et seconde faces n'est pas exclue de l'invention : verticale, plus ou moins inclinée.

Il est décrit également une feuille de verre dont une face au moins porte un revêtement d'un matériau comprenant de l'oxyde de titane, caractérisée en ce qu'elle est apte à être ou a été soumise à un traitement thermique à plus de 600 °C, tel que de trempe et/ou bombage, tout en préservant l'activité photocatalytique et la qualité optique requises pour un vitrage anti-salissure.

En premier lieu le traitement thermique à plus de 600 °C n'affecte pas le produit dans une mesure telle qu'il le rende impropre à une utilisation comme vitrage anti-salissures ; il a même été constaté non sans surprise que l'activité photocatalytique est comparable, voire meilleure dans certains cas, à celle obtenue à l'issue de traitements thermiques selon l'enseignement de la demande WO 02/24971 sus-mentionnée (par exemple recuit à 500 °C pendant 1 heure).

La mise en œuvre de températures de plus de 600 °C n'est pas non plus incompatible avec une qualité optique élevée, par laquelle on fait essentiellement référence à l'absence de défauts visibles à l'œil : flou, points ou piqûres, fissures. Avantageusement d'un point de vue industriel, la variation moyenne colorimétrique en réflexion côté revêtement photocatalytique induite par ce traitement thermique, ΔE, est d'au plus 2,8, de préférence d'au plus 2,3 ; cela exprime le fait que la colorimétrie en réflexion du produit final est proche de celle du produit de dépôt avant traitement thermique. ΔE est calculé par l'équation

$$\Delta E = \left( \Delta L^2 + \Delta a^{*2} + \Delta b^{*2} \right)^{1/2}$$

dans laquelle Δ exprime la variation d'un paramètre induite par le chauffage, L la clarté, a$^*$ et b$^*$ les coordonnées de chromaticité (système de colorimétrie L, a$^*$, b$^*$ : les valeurs positives de a$^*$ vont vers le rouge, les valeurs négatives vers le vert, les valeurs positives de b$^*$ vont vers le jaune et négatives vers le bleu ; la zone des valeurs de a$^*$ et b$^*$ proches de 0 est achromatique).

Il est également décrit :

- un vitrage monolithique, feuilleté, simple ou multiple, comprenant une feuille de verre telle que décrite précédemment ;
- un vitrage monolithique, feuilleté, simple ou multiple, dont au moins une première face d'au moins une première feuille de verre constitutive porte un revêtement d'un matériau à propriétés photocatalytiques, obtenu conformément au procédé de l'invention.

Selon d'autres caractéristiques de ce vitrage :

- sous ledit revêtement d'un matériau à propriétés photocatalytiques, ladite première face porte un ou plusieurs empilements de couches fonctionnelles et/ou couches fonctionnelles, comportant au moins une couche faisant barrière à la migration des alcalins du verre susceptible de résulter de l'application de températures excédant 600 °C (SiO$_2$ par pulvérisation magnétron) ;
- la seconde face de ladite première feuille de verre ou une seconde face appartenant à une seconde feuille de verre constitutive porte un ou plusieurs empilements de couches fonctionnelles et/ou couches fonctionnelles choisis parmi un empilement de contrôle thermique bas-émissif.

Il est également décrit l'application de ce vitrage comme vitrage « autonettoyant », notamment anti-buée, anti-condensation et anti-salissures, notamment vitrage pour le bâtiment du type double-vitrage, vitrage pour véhicule du type pare-brise, lunette arrière, vitres latérales d'automobile, rétroviseur, vitrage pour train, avion, bateau, vitrage utilitaire comme verre d'aquarium, vitrine, serre, d'ameublement intérieur, de mobilier urbain (abribus, panneau publicitaire...), miroir, écran de système d'affichage du type ordinateur, télévision, téléphone, vitrage électrocommandable comme vitrage électrochrome, à cristaux liquides, électroluminescent, vitrage photovoltaïque.

L'invention est illustrée ci-dessous au moyen d'exemples.

## EXEMPLE 1

Dans cet exemple on compare la transformation de $TiO_2$ amorphe obtenu par pulvérisation magnétron en sa forme active par trempe industrielle d'une part, recuit de 500 °C pendant 1 heure d'autre part.

Est évaluée l'activité photocatalytique à l'issue des deux traitements au moyen du test de photodégradation de l'acide stéarique suivi par transmission infra-rouge, décrit dans la demande WO 00/75087.

On dépose sur trois échantillons de verre clair silico-sodo-calcique de 4 mm d'épaisseur une couche de 60 nm d'épaisseur de SiOC par pyrolyse en phase gazeuse (CVD) comme décrit dans la demande WO 01/32578, et sur trois autres une couche de $SiO_2$ de 100 nm d'épaisseur par pulvérisation magnétron.

Sur les six échantillons on forme des revêtements de $TiO_2$ d'épaisseurs variables par pulvérisation magnétron à une pression de travail de $26.10^{-3}$ mbar, puis on en évalue l'activité photocatalytique comme indiqué ci-dessus après les deux traitements thermiques précités.

Les résultats sont consignés dans le tableau I ci-dessous.

Tableau I

| Essai n° | Epaisseur de $TiO_2$ (nm) | Sous-couche | TAS après trempe ($10^{-3}cm^{-1}min^{-1}$) | TAS après 1 h à 500°C ($10^{-3}cm^{-1}min^1$) |
|---|---|---|---|---|
| 1 | 25 | $SiO_2$ | 7,9 | 4,7 |
| 2 | 25 | SiOC | 10,2 | 2,3 |
| 3 | 39 | $SiO_2$ | 11,9 | 6,2 |
| 4 | 39 | SiOC | 3,4 | 7,3 |
| 5 | 146 | $SiO_2$ | 10,5 | 1,2 |
| 6 | 19 | SiOC | 6 | 3,7 |

Contrairement à ce qui était attendu, non seulement la trempe industrielle ne diminue pas de manière rédhibitoire l'activité photocatalytique, mais celle-ci est au moins comparable à celle résultant des traitements d'activation de $TiO_2$ connus de l'état de la technique tel que représenté notamment par WO 02 /24971 déjà cité. En effet l'activité n'est plus faible après trempe que dans l'essai n° 4.

Par conséquent, le $TiO_2$ préparé ici est trempable du point de vue de l'activité photocatalytique, même en mettant en œuvre des sous-couches barrières à la diffusion des alcalins du verre d'épaisseurs habituelles.

## EXEMPLE 2

Les essais 1, 3 et 5 ci-dessus , ainsi que les essais n° 7 et 8 caractérisés par des épaisseurs respectives de revêtement photocatalytique obtenu de 27 et 19 nm (même sous-couche barrière de $SiO_2$, mêmes conditions de préparation du $TiO_2$ qu'aux essais 1, 3 et 5), font l'objet d'une mesure de variation moyenne colorimétrique en réflexion côté revêtement induite par la trempe industrielle, $\Delta E$. La signification des différents paramètres dans le système de colorimétrie L, $a^*$, $b^*$ et l'équation permettant de calculer $\Delta E$ à partir de $\Delta L$, $\Delta a^*$, $\Delta b^*$ sont telles que décrites ci-dessus.

Les résultats sont consignés dans le tableau II ci-dessous.

Tableau II

| Essai n° | $\Delta L$ | $\Delta a^*$ | $\Delta b^*$ | $\Delta E$ |
|---|---|---|---|---|
| 1 | 1,02 | 0,23 | -0,46 | 1,14 |
| 3 | -0,08 | 0,77 | -2,10 | 2,24 |
| 5 | 1,40 | -0,47 | 0,91 | 1,73 |
| 7 | 1,70 | -0,57 | 0,04 | 1,79 |

(suite)

| Essai n° | ∆L | ∆a* | ∆b* | ∆E |
|----------|------|-------|-------|------|
| 8 | 1,39 | -1,15 | -2,09 | 2,76 |

Les valeurs de variation moyenne colorimétrique relativement basses, voire dans certains cas idéalement inférieures à 2, expriment une variation de couleur en réflexion côté revêtement photocatalytique faible après trempe industrielle de tous les revêtements, ce qui exclut l'obtention non désirée de produits trempés de colorimétrie en réflexion trop modifiée au cours de la trempe. Il devient plus aisé de prévoir la couleur finale dès avant la trempe.

## EXEMPLE 3

Cet exemple concerne un double vitrage constitué de deux feuilles de verre de 4 mm d'épaisseur entre lesquelles est intercalée une lame d'air de 15 mm d'épaisseur. Dans cet exemple et les suivants, la face 2 du double vitrage, c'est-à-dire la face en contact avec la lame d'air de la feuille de verre destinée à être installée la plus proche de l'atmosphère extérieure (et non de celle destinée à l'être côté intérieur d'un bâtiment), est revêtue d'un empilement de couches de contrôle thermique, fabriqué par pulvérisation magnétron. Ce procédé est particulièrement pratique pour déposer le plus large éventail de natures de couches, en en faisant varier et contrôlant précisément les épaisseurs, à l'échelle industrielle.

Ici cet empilement est bas-émissif c'est-à-dire réfléchissant le rayonnement infra-rouge thermique (longueurs d'onde de l'ordre de 10 $\mu$m) et apte à garder la chaleur à l'intérieur d'un bâtiment par exemple.

On étudie d'un point de vue optique l'association de l'empilement de contrôle thermique en face 2 et d'un empilement obtenu par pulvérisation magnétron et comportant $TiO_2$ photocatalytique et sous-couche $SiO_2$ barrière à la diffusion des alcalins en face 1, destinée à être en contact avec l'atmosphère extérieure.

Dans la suite on désigne par X, respectivement Y, les empilements bas-émissifs ne différant de celui de l'exemple 2 de la demande EP 0 718 250 A2 qu'en modifiant l'épaisseur de la couche (2) en 25 nm, respectivement des couches (2) en 19 nm et (3) en 29 nm.

Sont testées les quatre compositions de vitrages suivantes, définies ci-dessous uniquement par la feuille de verre côté extérieur :

3a : 4 mm verre/ 36 nm $Si_3N_4$/ X
3b : 18 nm $TiO_2$/ 150 nm $SiO_2$/ 4 mm verre/ X
3c : 18 nm $TiO_2$/ 75 nm $SiO_2$/ 9 nm $Si_3N_4$/ 63 nm $SiO_2$/ 4 mm verre/ X
3d : (même empilement photocatalytique que 3b).../ 4 mm verre/ Y

Dans cet exemple ainsi que dans les exemples 4-7 ci-dessous, tous les empilements ont été soumis à une trempe industrielle. Sont évaluées les caractéristiques optiques des vitrages en transmission, réflexion côté « intérieur » du bâtiment (c'est-à-dire face 4 du double vitrage, dont seules les faces 1 et 2 sont fonctionnalisées comme indiqué précédemment), réflexion côté « extérieur » du bâtiment (face 1 : verre ou $TiO_2$) (transmission et réflexion lumineuses TL et RL en %, coordonnées de chromaticité a* et b* en transmission et réflexion sur les deux faces du vitrage, telles que mentionnées précédemment). Les résultats sont consignés dans les tableaux suivants.

Tableau III.1 : transmission

| Vitrage n° | TL | a* | b* |
|------------|------|------|-----|
| 3a | 78,9 | -2,3 | 0,8 |
| 3b | 75,0 | -2,0 | 2,0 |
| 3c | 76,8 | -2,4 | 1,2 |
| 3d | 74,1 | -2,5 | 2,4 |

Tableau III.2: réflexion côté intérieur

| Vitrage n° | RL | a* | b* |
|------------|------|------|------|
| 3a | 12,2 | 0,2 | -2,6 |
| 3b | 15,7 | -1,1 | -5,3 |

(suite)

| Vitrage n° | RL | a* | b* |
|---|---|---|---|
| 3c | 14,1 | 0,2 | -3,6 |
| 3d | 16,0 | 0,5 | -6,0 |

Tableau III.3: réflexion côté extérieur

| Vitrage n° | RL | a* | b* |
|---|---|---|---|
| 3a | 11,6 | 0,0 | -5,8 |
| 3b | 16,0 | -1.0 | -8,1 |
| 3c | 13,9 | 0,4 | -6,4 |
| 3d | 15,8 | 0,6 | -8,7 |

La comparaison des vitrages 3a et 3b indique de quelle manière l'ajout du revêtement photocatalytique est susceptible de perturber les caractéristiques optiques du vitrage : on constate ainsi une diminution de TL, une augmentation de RL substantielle sur les deux faces, et une augmentation de chromaticité en réflexion sur les deux faces du vitrage vers le bleu-vert (valeurs négatives de a* et b*).

Par le vitrage 3c, comparé au vitrage 3b, on récupère une partie de TL perdue, on se rapproche avantageusement à nouveau des deux RL du vitrage 3a, et de ses valeurs de colorimétrie en réflexion.

## EXEMPLE 4

La méthodologie de l'exemple 3 est reprise pour les vitrages suivants (les empilements face 2 réfléchissent le rayonnement solaire, correspondant à des longueurs d'onde moyennes de l'ordre de 1 $\mu$m). Dans cet exemple on désigne par X, respectivement Y, l'empilement anti-solaire commercialisé par la société Saint-Gobain Glass France sous la marque enregistrée SGG Coollite ST®108, respectivement l'empilement obtenu en multipliant les épaisseurs des couches extrêmes de ce dernier par 3,7 -côté proximal du substrat verre- et 2/3 -côté distal- :

    4a : 6 mm verre/ X
    4b : 18 nm $TiO_2$/ 150nm $SiO_2$/ 6 mm verre/ X
    4c : 18 nm $TiO_2$/ 50 nm $SiO_2$/12 nm $Si_3N_4$/ 71 nm $SiO_2$/ 6 mm verre/ X
    4d : même empilement photocatalytique que 4b/ 6 mm verre/ Y

Dans cet exemple et dans les suivants les vitrages sont composés de deux feuilles de verre de 6 mm d'épaisseur entre lesquelles est intercalée une lame d'air de 12 mm d'épaisseur.

Les résultats sont consignés dans les trois tableaux ci-dessous.

Tableau IV.1 : transmission

| Vitrage n° | TL | a* | b* |
|---|---|---|---|
| 4a | 6,6 | 2,1 | 6,8 |
| 4b | 6,4 | 2,2 | 7,2 |
| 4c | 6,4 | 2,2 | 6,7 |
| 4d | 8,5 | 1,6 | 6,6 |

Tableau IV.2 : réflexion côté intérieur

| Vitrage n° | RL | a* | b* |
|---|---|---|---|
| 4a | 34,4 | -2,4 | 13,1 |
| 4b | 34,4 | -2,4 | 13,1 |

(suite)

| Vitrage n° | RL | a* | b* |
|---|---|---|---|
| 4c | 34,4 | -2,4 | 13,1 |
| 4d | 28,2 | -1,0 | 13,8 |

Tableau IV.3 : réflexion côté extérieur

| Vitrage n° | RL | a* | b* |
|---|---|---|---|
| 4a | 39,4 | -3,0 | 1,9 |
| 4b | 41,5 | -3,0 | 0,4 |
| 4c | 41,3 | -3,1 | 1,8 |
| 4d | 39,4 | -3,1 | 1,9 |

Ici, la TL est peu affectée par l'ajout de $TiO_2$ qui procure de plus une légère diminution de couleur jaune en réflexion côté extérieur $TiO_2$ (4b)/ verre(4a).

La modification de l'empilement anti-solaire (4d) apporte un gain de TL, une diminution substantielle de RL côté intérieur, accompagné d'une légère augmentation de couleur jaune en réflexion.

## EXEMPLE 5

On reproduit l'exemple 4, X et Y désignant ici respectivement l'empilement anti-solaire commercialisé par la société Saint-Gobain Glass France sous la marque enregistrée SGG Coollite ST® 120, et l'empilement ne différant de ce dernier qu'en multipliant par 2 l'épaisseur de la couche proximale du substrat verre:

5a : 6 mm verre/ X
5b : 18 nm $TiO_2$/ 150 nm $SiO_2$/ 6 mm verre/ X
5c : 18 nm $TiO_2$/ 68 nm $SiO_2$/ 10 nm $S_{13}N_4$/ 69 nm $SiO_2$/ 6 mm verre/ X
5d : idem 5b/ 6 mm verre/ Y

Tableau V.1 : transmission

| Vitrage n° | TL | a* | b* |
|---|---|---|---|
| 5a | 17,2 | -2,3 | -3,9 |
| 5b | 16,5 | -2,2 | -3,2 |
| 5c | 16,8 | -2,3 | -3,9 |
| 5d | 17,0 | -2,2 | -3,9 |

Tableau V.2 : réflexion côté intérieur

| Vitrage n° | RL | a* | b* |
|---|---|---|---|
| 5a | 29,5 | -0,3 | 13,7 |
| 5b | 29,7 | -0,3 | 13,4 |
| 5c | 29,6 | -0,3 | 13,6 |
| 5d | 31,1 | -0,5 | 12,8 |

Tableau V.3 : réflexion côté extérieur

| Vitrage n° | RL | a* | b* |
|---|---|---|---|
| 5a | 32,5 | -1,5 | -1,1 |
| 5b | 34,9 | -1,6 | -2,4 |
| 5c | 33,8 | -1,3 | -1,0 |
| 5d | 32,4 | -1,5 | -1,0 |

5c par rapport à 5b présente en regard de 5a une récupération partielle de la TL perdue ainsi que des deux RL et, notablement une récupération totale de couleur en réflexion des deux côtés, même avec une neutralité de coloration légèrement accrue.

Avec 5d, on accroît la TL récupérée, la réflexion côté intérieur est légèrement supérieure (moins bonne) tandis que la réflexion côté extérieur ($TiO_2$) est diminuée à un niveau encore plus faible (meilleur) que la RL de 5a côté extérieur (verre).

## EXEMPLE 6

On reproduit l'exemple précédent pour les vitrages suivants, dans lesquels X et Y désignent respectivement l'empilement anti-solaire commercialisé par la société Saint-Gobain Glass France sous la marque enregistrée SGG Coollite ST®136, et l'empilement ne différant de ce dernier qu'en multipliant l'épaisseur des couches proximale et distale du substrat verre par 1,7 et 0,774 :

6a : 6 mm verre/ X
6b : 18 nm $TiO_2$/ 150 nm $SiO_2$/ 6 mm verre/ X
6c : 18 nm $TiO_2$/ 66 nm $SiO_2$/ 10 nm $Si_3N_4$/ 57 nm $SiO_2$/ 6 mm verre/ X
6d : même empilement photocatalytique que 6b/ 6 mm verre/ Y

Tableau VI.1 : transmission

| Vitrage n° | TL | a* | b* |
|---|---|---|---|
| 6a | 32,6 | -2,4 | -3,4 |
| 6b | 31,1 | -2,2 | -2,6 |
| 6c | 31,7 | -2,4 | -3,2 |
| 6d | 30,7 | -2,1 | -2,1 |

Tableau VI.2 : réflexion côté intérieur

| Vitrage n° | RL | a* | b* |
|---|---|---|---|
| 6a | 22,7 | -0,4 | 8,1 |
| 6b | 23,3 | -0,6 | 7,1 |
| 6c | 23,1 | -0,5 | 7,7 |
| 6d | 27,4 | -1,1 | 3,6 |

Tableau VI.3 : réflexion côté extérieur

| Vitrage n° | RL | a* | b* |
|---|---|---|---|
| 6a | 21,4 | -1,2 | -6,4 |
| 6b | 24,8 | -1,6 | -7,5 |
| 6c | 23,4 | -1,1 | -6,3 |

(suite)

| Vitrage n° | RL | a* | b* |
|---|---|---|---|
| 6d | 21,1 | -1,4 | -6,2 |

La comparaison de 6a et 6b se caractérise par une augmentation de RL côté extérieur du vitrage et dans une moindre mesure, par une augmentation de chromaticité du second par rapport au premier.

Par l'optimisation de l'empilement photocatalytique 6c, on récupère une partie de la TL perdue, on rediminue substantiellement la RL côté extérieur tout en récupérant la couleur en réflexion sur la même face (même avec une colorimétrie plus neutre que 6a).

Par modification de l'empilement anti-solaire 6d, la RL côté extérieur ($TiO_2$) est abaissée à un niveau encore inférieur à celui de 6a côté verre, et la composante jaune de couleur en réflexion côté intérieur du vitrage est affaiblie par rapport à celle des trois autres vitrages.

## EXEMPLE 7

On reproduit l'exemple précédent avec les vitrages suivants, dans lesquels X et Y désignent respectivement l'empilement anti-solaire commercialisé par la société Saint-Gobain Glass France sous la marque enregistrée SGG Coollite ST®150, et l'empilement ne différant de celui-ci qu'en supprimant la couche proximale du substrat verre et multipliant l'épaisseur de la couche intermédiaire par 1,5 et de la couche distale par 0,68 :

7a : 6mm verre/ X
7b : 18 nm $TiO_2$/ 150 nm $SiO_2$/ 6 mm verre/ X
7c : 18 nm $TiO_2$/ 64 nm $SiO_2$/ 13 nm $Si_3N_4$/ 50 nm $SiO_2$/ 6 mm verre/ X
7d : même empilement photocatalytique que 7b/ 6 mm verre/ Y

Tableau VII.1 : transmission

| Vitrage n° | TL | a* | b* |
|---|---|---|---|
| 7a | 45,7 | -2,4 | -1,3 |
| 7b | 43,5 | -2,1 | -0,3 |
| 7c | 44,4 | -2,3 | -1 |
| 7d | 33,4 | -2,1 | -0,4 |

Tableau VII.2 : réflexion côté intérieur

| Vitrage n° | RL | a* | b* |
|---|---|---|---|
| 7a | 21,4 | -1,0 | 1,5 |
| 7b | 22,6 | -1,3 | 0,4 |
| 7c | 22,1 | -1,1 | 1,1 |
| 7d | 26,0 | -1,1 | 2,1 |

Tableau VII.3 : réflexion côté extérieur

| Vitrage n° | RL | a* | b* |
|---|---|---|---|
| 7a | 14,3 | -1,1 | -7,2 |
| 7b | 18,4 | -1,8 | -8,8 |
| 7c | 16,7 | -1,1 | -7,3 |
| 7d | 17,5 | -1,2 | -6,8 |

On remarque notamment la quasi-récupération de couleur en réflexion côté extérieur de 7c par rapport à 7a.

## EXEMPLE 8

Cet exemple concerne un empilement dit « quatre saisons », à la fois anti-solaire et bas-émissif, commercialisé par la société Saint-Gobain Glass France sous la marque enregistrée Planistar®. A la différence des empilements de contrôle thermique des exemples précédents, mais à l'instar de ceux des exemples suivants, celui-ci n'est pas soumis à la trempe industrielle, qui est donc effectuée, le cas échéant, avant son dépôt, sur la feuille de verre éventuellement munie de son revêtement de $TiO_2$ et la sous-couche barrière.

On teste les vitrages

8a : 6 mm verre/ Planistar®
8b : 18 nm $TiO_2$/ 150 nm $SiO_2$/ 6 mm verre/ Planistar®
8c : 18 nm $TiO_2$/ 68 nm $SiO_2$/ 8nm $Si_3N_4$/ 58 nm $SiO_2$/ 6 mm verre/ Planistar®

Tableau VII1.1 : transmission

| Vitrage n° | TL | a* | b* |
|---|---|---|---|
| 8a | 67,7 | -4,7 | 3,4 |
| 8b | 64,4 | -4,3 | 4,6 |
| 8c | 65,6 | -4,6 | 3,7 |

Tableau VIII.2 : réflexion côté intérieur

| Vitrage n° | RL | a* | b* |
|---|---|---|---|
| 8a | 13,7 | 0,4 | -3,0 |
| 8b | 15,5 | -2,9 | -6,0 |
| 8c | 15,4 | -0,3 | -2,9 |

Tableau VIII.3 : réflexion côté extérieur

| Vitrage n° | RL | a* | b* |
|---|---|---|---|
| 8a | 11,1 | -2,6 | -2,6 |
| 8b | 16,3 | -1,2 | -4,2 |
| 8c | 13,9 | -2,3 | -3,2 |

Le vitrage 8c, par rapport à 8b, restaure la coloration en réflexion côté intérieur de 8a, ainsi que du côté extérieur où la diminution de RL par rapport à 8b est d'autre part un peu plus significative.

## EXEMPLE 9

L'empilement de contrôle thermique est un empilement anti-solaire commercialisé par la société Saint-Gobain Glass France sous la marque enregistrée SKN® 154. Sont testés les vitrages

9a : 6 mm verre/ SKN® 154
9b : 18 nm $TiO_2$/ 150 nm $SiO_2$/ 6 mm verre/ ...idem 9a
9c : 18 nm $TiO_2$/ 68 nm $SiO_2$/ 8 nm $Si_3N_4$/ 58 nm $SiO_2$/ 6 mm verre/ idem 9a

Tableau IX.1 : transmission

| Vitrage n° | TL | a* | b* |
|---|---|---|---|
| 9a | 49,3 | -7,9 | 2,7 |
| 9b | 47,0 | -7,5 | 3,5 |
| 9c | 47,8 | -7,7 | 3,0 |

Tableau IX.2 : réflexion côté intérieur

| Vitrage n° | RL | a* | b* |
|---|---|---|---|
| 9a | 23,0 | 0,7 | 5,9 |
| 9b | 24,4 | -0,2 | 4,9 |
| 9c | 24,0 | 0,1 | 5,4 |

Tableau IX.3 : réflexion côté extérieur

| Vitrage n° | RL | a* | b* |
|---|---|---|---|
| 9a | 19,2 | -3,1 | -9,2 |
| 9b | 22,8 | -3,2 | -9,9 |
| 9c | 21,6 | -2,9 | -9,3 |

Est ici particulièrement manifeste, côté extérieur, l'obtention avec 9c d'une RL intermédiaire entre celle des deux autres vitrages, et d'une composante bleue de la coloration en réflexion quasiment au même niveau qu'en l'absence de $TiO_2$ (9a).

## EXEMPLE 10

On teste l'empilement SKN® 165B également commercialisé par la société déposante, et plus particulièrement les vitrages

10a : 6 mm verre/ SKN® 165B
10b: 18 nm $TiO_2$/150 nm $SiO_2$/ 6 mm verre/ ...idem 10a
10c : 18 nm $TiO_2$/ 69 nm $SiO_2$/ 9 nm $Si_3N_4$/ 49 nm $SiO_2$/ 6 mm verre/ ...idem 10a

Tableau X.1 : transmission

| Vitrage n° | TL | a* | b* |
|---|---|---|---|
| 10a | 60,1 | -7,5 | 4,2 |
| 10b | 57,3 | -7,2 | 5,1 |
| 10c | 58,5 | -7,5 | 4,7 |

Tableau X.2 : réflexion côté intérieur

| Vitrage n° | RL | a* | b* |
|---|---|---|---|
| 10a | 19 | 2,1 | 1,3 |
| 10b | 21,1 | 0,7 | 0,3 |
| 10c | 20,2 | 1,5 | 0,8 |

Tableau X.3 : réflexion côté extérieur

| Vitrage n° | RL | a* | b* |
|---|---|---|---|
| 10a | 15,7 | -2,2 | -9,8 |
| 10b | 19,6 | -2,6 | -10,5 |
| 10c | 17,9 | -1,9 | -10,1 |

## EXEMPLE 11

On forme sur une feuille de verre une couche SiOC barrière à la migration des alcalins de 50 nm d'épaisseur recouverte d'une couche de 15 nm de $TiO_2$ photocatalytique par un procédé CVD en reproduisant l'exemple 5 du brevet EP 0 850 204 B1.

L'activité photocatalytique évaluée par photodégradation de l'acide stéarique suivie par transmission infrarouge comme précédemment est de $9.10^{-3}cm^{-1}min^{-1}$, et de $7.10^{-3}cm^{-1}min^{-1}$ après trempe industrielle, ce qui correspond à un maintien de la fonctionnalité dans une large et satisfaisante proportion.

Ainsi l'invention met-elle à disposition la possibilité de préparer des vitrages à revêtements photocatalytiques anti-salissures trempables et à haute activité, dans les meilleures conditions industrielles, avec des niveaux de transmission et réflexion lumineuses et des caractéristiques de colorimétrie en transmission et en réflexion aisément réglables aux valeurs recherchées par l'utilisateur.

## Revendications

1. Procédé de préparation d'un matériau à propriétés photocatalytiques comprenant de l'oxyde de titane au moins partiellement cristallisé sous forme anatase, comprenant le dépôt par pulvérisation cathodique d'une sous-couche de $SiO_2$ et d'un revêtement d'oxyde de titane sur une première face d'un premier substrat transparent ou semi-transparent du type verre ou vitrocéramique, et d'un empilement de contrôle thermique bas-émissif sur la seconde face dudit premier substrat transparent ou semi-transparent, les dépôts sur les première et seconde faces étant effectués en ligne simultanément ou quasi-simultanément selon des directions sensiblement identiques et des sens opposés, et ledit procédé mettant en œuvre des températures excédant 600°C postérieurement aux dépôts sur lesdites première et seconde faces.

2. Procédé selon la revendication 1, **caractérisé en ce qu'**il met en œuvre des températures excédant 630 °C postérieurement aux dépôts sur lesdites première et seconde faces.

3. Procédé selon la revendication 1 ou 2, **caractérisé en ce qu'**il met en œuvre un traitement de trempe et/ou bombage d'un vitrage postérieurement aux dépôts sur lesdites première et seconde faces.

## Patentansprüche

1. Verfahren zur Herstellung eines Materials mit photokatalytischen Eigenschaften, umfassend mindestens teilweise kristallisiertes Titanoxid in Anatasform, umfassend die Sputterabscheidung einer $SiO_2$-Unterschicht und einer Titanoxidbeschichtung auf einer ersten Seite eines ersten transparenten oder semitransparenten Substrats vom Glas- oder Glaskeramiktyp, und eines niedrig emittierenden Wärmeregelstapels auf der zweiten Seite des ersten transparenten oder semitransparenten Substrats, wobei die Abscheidungen auf der ersten und zweiten Seite gleichzeitig oder fast gleichzeitig in einer Linie in im Wesentlichen identischen und entgegengesetzten Richtungen durchgeführt werden, und wobei bei dem Verfahren Temperaturen verwendet werden, die 600 °C nach den Abscheidungen auf der ersten und zweiten Seite überschreiten.

2. Verfahren nach Anspruch 1, **dadurch gekennzeichnet, dass** dabei Temperaturen von mehr als 630 °C nach Abscheidungen auf der ersten und zweiten Seite verwendet werden.

3. Verfahren nach Anspruch 1 oder 2, **dadurch gekennzeichnet, dass** dabei eine Abschreck- und/oder Biegebehandlung einer Verglasung nach den Abscheidungen auf der ersten und zweiten Seite durchgeführt wird.

**Claims**

1. A method of preparing a material exhibiting photocatalytic properties comprising at least partially crystallized titanium oxide in anatase form, comprising the deposition by cathode sputtering of a $SiO_2$ sublayer and a titanium oxide coating on a first face of a first transparent or semitransparent substrate of the glass or glass-ceramic type, and of a thermal control low-emissivity multilayer on the second face of said first transparent or semitransparent substrate, the deposition on the first and second faces being carried out in line simultaneously or almost simultaneously along substantially identical directions and in opposite senses wherein said process employs temperatures in excess of 600°C after the deposition on said first and second faces.

2. The method as claimed in claim 1, **characterized in that** it employs temperatures in excess of 630°C.

3. The method as claimed in claim 1 or 2, **characterized in that** it entails a toughening and/or bending treatment carried out on glazing.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9710186 A
- US 2002045073 A
- WO 0224971 A
- WO 0075087 A
- WO 0132578 A
- EP 0718250 A2
- EP 0850204 B1